# EUROPEAN PATENT SPECIFICATION

(11) **EP 2 907 658 B1**
(45) Date of publication and mention of the grant of the patent: **03.04.2019**
(21) Application number: 15152792.6
(22) Date of filing: 28.01.2015
(51) Int. Cl.: B32B 9/04

(54) **THE USE OF A COMPOSITE STRUCTURE FOR CHANGING VISCOSITY OF LIQUID MEDIUM IN A BOUDARY LAYER**
DIE VERWENDUNG EINER VERBUNDSTRUKTUR, ZUR ÄNDERUNG DER VISKOSITÄT EINES FLÜSSIGEN MEDIUMS IN EINER GRENZSCHICHT
UTILISATION D'UNE STRUCTURE COMPOSITE POUR CHANGER LA VISCOSITÉ D'UN MILIEU LIQUIDE DANS LA COUCHE LIMITE

(30) Priority: 18.02.2014 CN 201410054641
(43) Date of publication of application: 19.08.2015
(73) Proprietor: Jilin University, Changchun City Jilin (CN)
(72) Inventor: Tian, Limei, Changchun City Jilin (CN); Ren, Luquan, Changchun City Jilin (CN); Shang, Yangeng, Changchun City Jilin (CN); Han, Zhiwu, Changchun City Jilin (CN); Mei, Haoran, Changchun City Jilin (CN); Wang, Yinci, Changchun City Jilin (CN)
(74) Representative: Petraz, Gilberto Luigi

(56) References cited:
- WO-A2-2013/115868
- CN-A- 103 333 658
- CN-A- 103 802 404
- JP-A- S60 208 467
- US-A1- 2004 076 810
- SLACK G A ET AL: "The intrinsic thermal conductivity of AIN", JOURNAL OF PHYSICS AND CHEMISTRY OF SOLIDS, PERGAMON PRESS, LONDON, GB, vol. 48, no. 7, 1 January 1987 (1987-01-01), pages 641-647, XP024670297, ISSN: 0022-3697, DOI: 10.1016/0022-3697(87)90153-3 [retrieved on 1987-01-01]

## Description

### FIELD OF THE INVENTION

The present invention relates to a composite structure, in particular to a composite structure capable of changing the viscosity of a liquid medium.

### BACKGROUND

Flexible surface materials deform under the action of pressure or resistance of a liquid medium, thus resulting in internal energy, which internal energy is dissipated in the form of heat. If the heat can not be transferred out, it will inevitably lead to aging of the flexible surface layer material, thereby reducing its service life. If the heat can be transferred to the fluid medium, it will make the temperature of the boundary layer of the fluid medium increase. Therefore, the kinematic (dynamic) viscosity of the fluid medium of the boundary layer is reduced, and then the viscous resistance of the liquid medium is necessarily reduced. The present invention is proposed by the inspiration from this objective phenomenon.

WO 2013/115868 A2 discloses a composite structure for changing the characteristics of slippery liquid-infused porous surfaces.

### SUMMARY OF THE INVENTION

An object of the present invention is directed to the use of a composite structure for changing the viscosity of a liquid medium in the boundary layer when the liquid medium contacts a surface thereof, characterized in that the composite structure is formed by inlaying a flexible surface layer (1) into a rigid substrate (2); wherein the rigid substrate (2) is of a non-heat-conduction material, wherein a thermal conduction material is added into the flexible surface layer (1) material, and wherein the thermal conduction material is graphene, aluminum powder, silver powder or AIN.

The composite structure according to the present invention is formed by inlaying a flexible surface layer into a rigid substrate, and the rigid substrate material is a non-heat-conduction material. The flexible surface layer is combined with the rigid substrate in an inlaying manner, so as to couple a non-smooth structure of the rigid substrate with the flexible surface layer, so that the maximum deformation capacity of the flexible surface layer is obtained, and thus the temperature can rise by 2-3 °C.

When the fluid medium makes the flexible surface layer deformed under the flow resistance and gravity, the temperature of the flexible surface layer rises by 2-3 °C.

A thermal conduction material is added in to the flexible surface layer material.

The thermal conduction material is graphene, silver powder or AIN, a heat conduction net chain is formed in the flexible surface layer material, so that the heat produced by the work which is applied by the liquid medium to a coupled structure can be maximally transferred out, and the control to the temperature of a boundary layer of the liquid medium is realized. Therefore, the kinematic (dynamic) viscosity of the fluid medium of the boundary layer is reduced, and then the viscous resistance of the liquid medium is reduced.

The beneficial effect of the invention is to reduce the kinematic (dynamic) viscosity of the fluid medium of the boundary layer, and then to reduce the viscous resistance of the liquid medium.

### BRIEF DESCRIPTION OF THE DRAWINGS

Figure 1 is a schematic view of the structure according to the present invention.
Figure 2 is a schematic diagram of the principle of the present invention.

### DETAILED DESCRIPTION OF PREFERED EMBODIMENTS

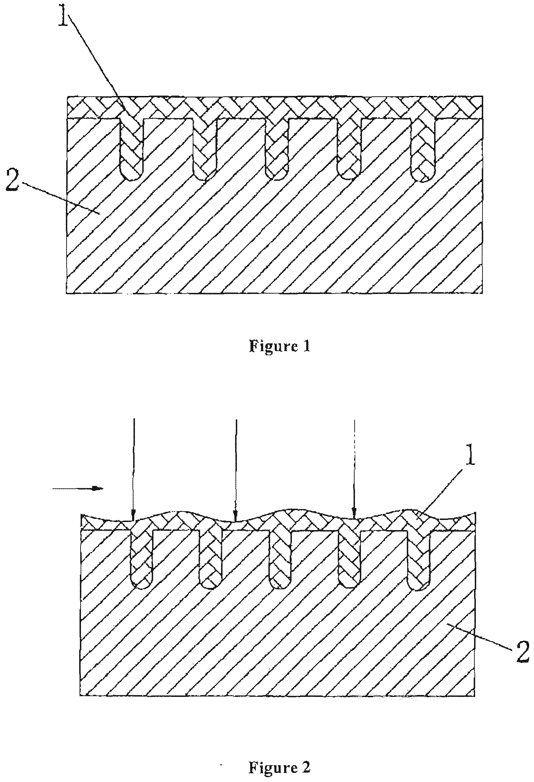

See Figure 1, the present embodiment is formed by inlaying a flexible surface layer 1 into a rigid substrate 2, and the material for the rigid substrate 2 is a non heat conduction material. The flexible surface layer 1 is combined with the rigid substrate 2 in an inlaying manner, so as to couple a non-smooth structure of the rigid substrate 2 with the flexible surface layer 1, so that the maximum deformation capacity of the flexible surface layer 1 is obtained, and thus the temperature can rise by 2-3 °C.

As shown in Figure 2, when a pipe was made in the present invention, the fluid medium made the flexible surface layer 1 deformed under the flow resistance and gravity, and a temperature rise occurred in the flexible surface layer, as determined through actual tests, the temperature rise is of 2-3 °C. Therefore, the kinematic (dynamic) viscosity of the fluid medium of the boundary layer is reduced, and then the viscous resistance of the fluid medium is reduced. In Figure 2, the three downforward arrows indicate the pressure applied by the fluid medium to the flexible surface layer 1, and the single rightforward arrow indicates the flow direction of the fluid medium.

A thermal conduction material is added into the material of the flexible surface layer 1.

The thermal conduction material is graphene, silver powder or AIN, from which a heat conduction net chain is formed in the flexible surface layer 1 material, so that the heat produced by the work which is applied by the liquid medium to the coupled structure can be maximally transferred out, and the control to the temperature of a boundary layer of the liquid medium is realized.

The material of the flexible surface layer 1 is silicone rubber, in which the graphene added in four layers, each layer having a thickness of 2nm. The volume ratio between the flexible surface layer 1 material and the grapheme is 100: 25. At this time, the thermal conductivity of the material is enhanced by 3000% to 6.44 w / (m.k).

The material of the flexible surface layer 1 is polyvinylidene fluoride (PVDF), into which AIN as a thermal conduction filler is added with a total packing volume fraction for AIN of 60%. Particularly, AIN is surface-treated with a silane coupling agent, and then added to the PVDF (polyvinylidene fluoride), and AIN is a mixture of AIN whiskers and AIN particles at a volume ratio of 1 / 25.7, the resulted material has the maximum thermal conductivity of 11.5 W / (m.k), a PVDF density of 1.17-1.79 g / cm³, and an AIN density of 3.26 g/cm³.

The material of the flexible surface layer 1 is prepared by using a linear novolac epoxy resin as a matrix resin, AIN as a thermal conduction filler, a linear novolak resin as a curing agent, and the prepared material has an AIN volume fraction of 70%, a thermal conductivity of up to 14 W / (m.k) flexible surface material, in which AIN is a mixture of AIN whiskers and AIN particles at a volume ratio of 1 / 25.7.

The material of the flexible surface layer 1 uses a linear novolac epoxy resin as a matrix resin, a linear novolac resin as a curing agent, aluminum powder as a thermal conduction material. The matrix resin, curing agent and aluminum powder having a diameter of 40 µm are mixed at a mass ratio of 100:8:34, and then cast molded, thus the flexible surface layer material prepared has a thermal conductivity of 4.6 W / (m.k), the material of the flexible surface layer 1 has excellent dimensional stability, a tensile strength of 81 MPa, compressive strength of 215 MPa.

## Claims

1. The use of a composite structure for changing the viscosity of a liquid medium in the boundary layer when the liquid medium contacts a surface thereof, **characterized in that** the composite structure is formed by inlaying a flexible surface layer (1) into a rigid substrate (2);
wherein the rigid substrate (2) is of a non-heat-conduction material, wherein a thermal conduction material is added into the flexible surface layer (1) material, and wherein the thermal conduction material is graphene, aluminum powder, silver powder or AIN.

## Patentansprüche

1. Die Verwendung einer Verbundstruktur zur Änderung der Viskosität eines flüssigen Mediums in der Grenzschicht, wenn das flüssige Medium eine Oberfläche davon berührt, **dadurch gekennzeichnet, dass** die Verbundstruktur durch Einlegen einer flexiblen Oberflächenschicht (1) in ein starres Substrat (2) hinein gebildet ist;
worin das starre Substrat (2) aus einem nichtwärmeleitenden Material besteht, worin ein Wärmeleitungsmaterial in das flexible Oberflächenschicht (1)-Material hinein hinzugegeben wird, und worin das Wärmeleitungsmaterial Graphen, Aluminiumpulver, Silberpulver oder AlN ist.

## Revendications

1. Emploi d'une structure composite pouvant changer la viscosité d'un milieu liquide dans la couche limite lorsque le milieu liquide entre en contact avec une surface de celle-ci, **caractérisé en ce que** ladite structure composite est formée par incrustation d'une couche de surface souple (1) dans un substrat rigide (2) ;
dans lequel le substrat rigide (2) est constitué d'un matériau non-conducteur de chaleur, dans lequel un matériau conducteur de chaleur est ajouté dans le matériau de la couche de surface souple (1), et dans lequel le matériau conducteur de chaleur est graphène, poudre d'aluminium, poudre d'argent ou AIN.
